Europäisches Patentamt

European Patent Office

Office européen des brevets

(19)

(11) Veröffentlichungsnummer: **0 008 672**
B1

(12) **EUROPÄISCHE PATENTSCHRIFT**

(45) Veröffentlichungstag der Patentschrift: **16.02.83**

(21) Anmeldenummer: **79102733.7**

(22) Anmeldetag: **31.07.79**

(51) Int. Cl.³: **H 04 N 9/04, H 04 N 9/11, H 04 N 3/15, H 04 N 3/36**

(54) **Anordnung zur Farbbildabtastung.**

(30) Priorität: **31.08.78 DE 2838099**

(43) Veröffentlichungstag der Anmeldung:
**19.03.80 Patentblatt 80/6**

(45) Bekanntmachung des Hinweises auf die Patenterteilung:
**16.02.83 Patentblatt 83/7**

(84) Benannte Vertragsstaaten:
**FR GB IT**

(56) Entgegenhaltungen:
FR - A - 2 359 557
US - A - 3 952 328

IBM TECHNICAL DISCLOSURE BULLETIN, Band 20, Nr. 1, Juni 1977, Seiten 436—437, New York, U.S.A., S. G. CHAMBERLAIN et al.: "Silicon Solid-State Fet Color Scanner"
MICROELECTRONICS, Band 7, Nr. 2, Dezember 1975, Seiten 60—62, Luton, T. SIMMS: "The application of CCD's to document scanning"
FKTG. Fernseh- und Kinotechnische Gesellschaft e.V. Tagungsband der 5.

(73) Patentinhaber: **SIEMENS AKTIENGESELLSCHAFT**
**Berlin und München Wittelsbacherplatz 2**
**D-8000 München 2 (DE)**

(72) Erfinder: **Herbst, Heiner, Dr.**
**Am See 2**
**D-8013 Haar (DE)**

(56) Entgegenhaltungen:
Jahrestagung der FKTG von 19. bis 23. September in Kiel, Vortrag 26, Seiten 219—223, D. POETSCH: "Neue Lösungswege bei der Filmabtastung"

## Anordung zur Farbbildabtastung

Die Erfindung bezieht sich auf eine Anordnung zur Abtastung eines Farbbildes nach dem Oberbegriff des Patentanspruchs 1.

Eine Anordnung dieser Art ist aus dem Tagungsband der 5. Jahrestagung der FKTG (Fernseh- und Kinotechnische Gesellschaft e. V.) vom 19. bis 23. September 1977 in Kiel, Vortrag 26, Seiten 219—223, insbesondere Bild 8, bekannt. Hierbei sind neben dem die erste Gruppe von Bildpunkten enthaltenden linearen CTD-Bildsensor noch zwei weitere lineare CTD-Bildsensoren vorgesehen. Eine Abbildungsoptik zerlegt das absutastende Farbbild in ein rotes, grünes und blaues Teilbild, die derart auf die Bildsensoren abgebildet werden, daß jeder derselben auf dieselbe Bildzeile ausgerichtet ist.

In Bild 6 derselben Veröffentlichung sind CTD-Bildsensoren dargestellt, deren Bildpunkte jeweils in zwei Gruppen aufgeteilt sind. Dabei weist einer dieser Sensoren zwei kammartig verschachtelte, parallel zueinander liegende Reihen von Fotodioden auf, die über individuell zugeordnete, nacheinander ansteuerbare Transfergates auf zwei gruppenspezifische Ausleseleitungen entladen werden. Diese sind an einen gemeinsamen Sensorausgang geführt. Ein anderer Sensor weist zwei kammartig verschachtelte Gruppen von Bildpunkten auf, die in einer Reihe liegen. Die Bildpunkte der einen Gruppe sind dabei mit den Stufen einer ersten Auslese-CCD-Anordnung verbindbar, die Bildpunkte der anderen Gruppe mit einer zweiten Auslese-CCD-Anordnung. Beide Ausleseanordnungen sind mit einem gemeinsamen Videoausgang verbunden.

Zum Zwecke der Farbteilung wird in obiger Veröffentlichung auf Abbildungsoptiken hingewiesen, die eine spektrale Zerlegung der das Farbbild abtastenden Lichtstrahlen bewirken. Zusätzlich findet sich ein allgemeiner Hinweis auf Farbstreifenfilter, die einem linearen CCD-Bildsensor vorgeordnet sind. Eine Gruppenaufteilung der Bildpunkte in der oben erwähnten Art zum Zwecke einer Farbteilung ist allerdings nicht beschrieben.

Aus dem IBM TEchnical Disclosure Bulletin, Band 20, Nr. 1, Juni 1977, Seiten 436 und 437, ist ein für eine Farbbildabtastung verwendeter linearer CCD-Bildsensor bekannt, dessen in einer einzigen Reihe liegende Bildpunkte in drei ineinander verschachtelte Gruppen aufgeteilt sind. Dabei sind die Bildpunkte einerseits mit gruppenspezifischen Empfindlichkeitskurven aus unterschiedlichen Spektralbereichen versehen und andererseits mit einer von drei gruppenspezifischen Auslese-CCD-Anordnung verbunden. Letzere weisen Ausgänge auf, an denen den Empfindlichkeitskurven entsprechende Farbsignale nach Gruppen getrennt abgreifbar sind.

Der Erfindung liegt die Aufgabe zugrunde, eine Anordnung der eingangs genannten Art anzugeben, die insbesondere im Hinblick auf eine gute Farbwiedergabe und Bildauflösung störungsfreier arbeitet als die bekannten Anordnungen. Das wird erfindungsgemäß durch eine Ausbildung nach den kennzeichnenden Merkmalen des Anspruchs 1 oder nach den kennzeichnenden Merkmalen des Anspruchs 2 erreicht.

Der Vorteil der Anordnung nach Anspruch 1 liegt insbesondere darin, daß ein Kompromiß erzielt wird hinsichtlich der erreichten Farbtreue und Bildauflösung einerseits und dem dazu erforderlichen Integrationsgrad bei den linearen CTD-Bildsensoren andererseits. Sehr vorteilhaft ist es hierbei, daß durch den Lichtteiler und durch die Farbfilter in der beanspruchten Aufteilung auf die einzelnen Spektralbereiche eine zahlenmäßige Zuordnung der Bildpunkte auf die Spektralbereiche erfolgen kann, nach der dem Spektralbereich, der den ganzen Bereich des sichtbaren Lichtes umfaßt, die Hälfte aller Bildpunkte zugeordnet ist, während den Spektralbereichen der Grundfarben Rot und Blau jeweils ein Viertel der Bildpunkte zugeteilt sind.

Der Vorteil der Anordnung nach Anspruch 2 liegt insbesondere darin, daß eine große Farbtreue und Bildauflösung erreicht werden und die oben erwähnte zahlenmäßige Zuordnung der Bildpunkte auf die Spektralbereiche ohne die Anwendung eines Lichtteilers erfolgt, jedoch mit einem höheren Integrationsgrad bei dem Bildsensor.

In dem Buch von H. Lang "Farbmetrik und Farbfernsehen", Verlag R. Oldenbourg, München 1978, Seiten 122 bis 124, insb. Bild 7.6, ist ein Lichtpunktabtaster für Farbdiapositive beschrieben, bei dem als Lichtquelle eine Braunsche Röhre mit einem Fernsehraster beschreibenden Leuchtpunkt vorgesehen ist. Die von diesem ausgehenden, auf jeweils einen Bildpunkt des Farbbildes fokussierten Lichtstrahlen durchdringen diesen, werden in drei Lichtbündel aufgeteilt, mittels Farbfilter nach unterschiedlichen Spektralbereichs-Empfindlichkeitskurven bewertet und rufen in Fotomultipliern Fotoströme hervor, die dann in sog. Farbwertsignale der Grundfarben Rot, Grün und Blau umgesetzt werden. Letzere steuern dann beispielsweise die Helligkeiten der Grundfarben einer Farbfernsehbildröhre. Eine solche Steuerung ist im Bild 5.2 auf Seite 89 des genannten Buches dargestellt. Wegen der geringen, den Fotomultipliern zur Verfügung gestellten Lichtmengen ist bei dieser Anordnung der Störabstand der Farbwertsignale klein.

Die Ansprüche 3 bis 11 stellen vorteilhafte Weiterbildungen der Erfindung dar.

Die Erfindung wird nachfolgend an Hand der Zeichnung näher erläutert. Dabei zeigt:

Fig. 1 ein erstes Ausführungsbeispiel der Erfindung,

Fig. 2 einen linearen-CTD-Bildsensor,

Fig. 3 Spannungs-Zeit-Diagramme zur Erläuterung der Betriebsweise eines Bildsensors nach Fig. 2,

Fig. 4 ein zweites Ausführungsbeispiel,

Fig. 5 ein drittes Ausführungsbeispiel und

Fig. 6 eine Weiterbildung des CTD-Bildsensors nach Fig. 2.

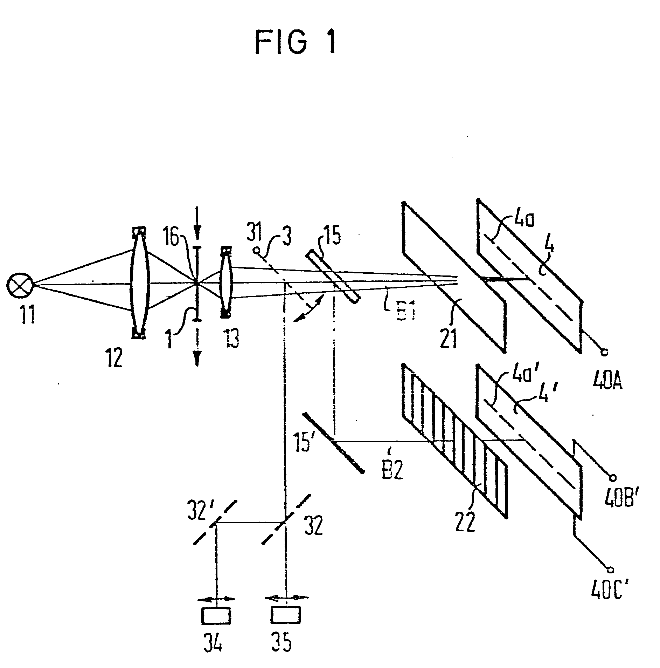

In Fig. 1 ist eine Anordnung zur fotoelektrischen Abtastung eines transparenten Farbbildes 1 dargestellt, die eine ortsfeste Lichtquelle 11, eine erste Optik 12, eine zweite Optik 13, einen Lichtteiler 15, 15' Farbfilter 21 und 22 und diesen zugeordnete, lineare Bildsensoren 4 und 4' aufweist. Die Bildsensoren befinden sich jeweils in Abbildungsebenen, auf die eine fokussierte Abbildung des Farbbildes 1 mittels der Optik 12 und der Optik 13 erfolgt. Dabei teilt der Lichtteiler 15, 15' die von 11 ausgehenden und das Farbbild 1 durchdringenden Lichtstrahlen in zwei Lichtbündel B1 und B2 auf, die in den Farbfiltern 21 und 22 bewertet werden und entsprechend gefilterte Abbildungen von 1 in den Ebenen der Bildsensoren 4 und 4' entstehen lassen. Als Lichtteiler wird beispielsweise ein halbdurchlässiger Spiegel 15 verwendet, dem ein vollständig reflektierender Spiegel 15' gegenübergestellt ist. Jeder der linearen Bildsensoren weist nur eine Reihe von fotosensitiven Punkten, die auch als Bildpunkte bezeichnet werden, auf. Die Bildpunktreihe des Bildsensors 4 ist mit 4a und die des Bildsensors 4' mit 4a' bezeichnet. Auf diese Bildpunktriehen wird jeweils eine senkrecht zur Zeichenebene verlaufende Zeile des Farbbildes 1 abgebildet, bei dem in Fig. 1 dargestellten Strahlengang die durch den Punkt 16 gehende Zeile.

Das Farbfilter 21 bewertet das Lichtbündel $B_1$ nach einer Empfindlichkeitskurve, die beispielsweise in einem der Grundfarbe Grün zugeordneten Spektralbereich liegt (G-Filter). Andererseits kann das Filter 21 auch nach einer Empfindlichkeitskurve bewerten, die in einem Spektralbereich liegt, der etwa den ganzen Bereich des sichtbaren Lichtes umfaßt. Dabei weist sie dann einen Bereich maximaler Empfindlichkeit im Spektralbereich der Grundfarbe Grün auf. Man bezeichnet das Filter 21 im letzteren Fall auch alsl W-Filter. Das Farbfilter 22 besteht aus streifenartigen Filterteilen, die alternierend als R-Filter und B-Filter ausgebildet sind. Hierunter wird verstanden, daß die Filterteile des R-Typs mit ihrer Empfindlichkeitskurve im Spektralbereich der Grundfarbe Rot liegen und die Filterteile des B-Typs mit ihrer Empfindlichkeitskurve im Spektralbereich der Grundfarbe Blau. Den hinter dem Filter 22 liegenden Bildpunkten des Bildsensors 4' ist innerhalb ihrer Reihe abwechselnd ein Filterteil des R-Typs und ein Filterteil des B-Typs vorgesetzt.

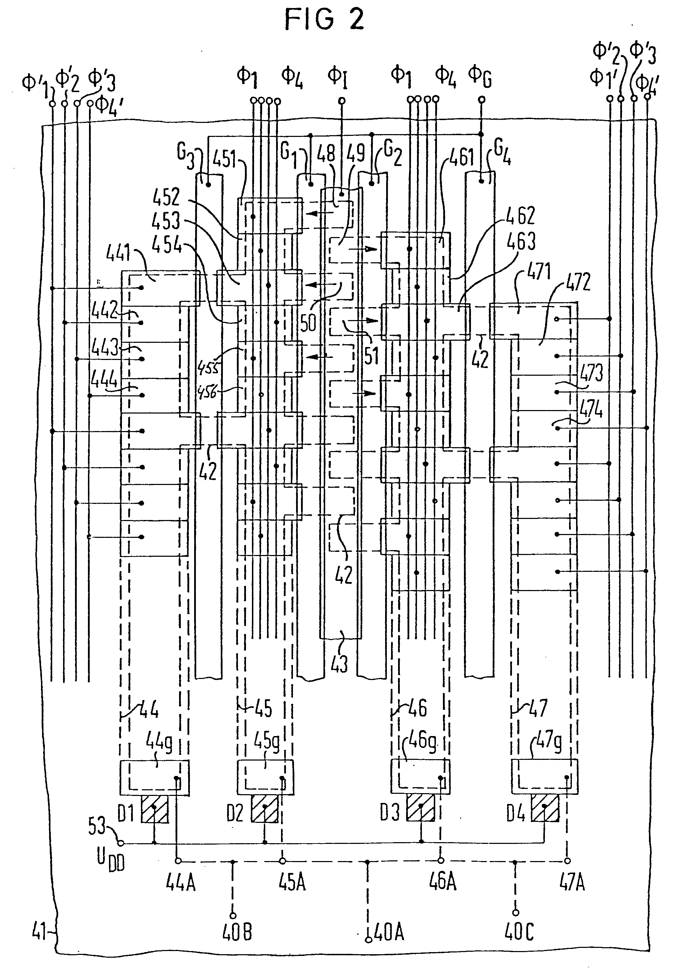

Ist das Farbfilter 21 als G-Filter ausgebildet und besteht das Farbfilter 22 aus R- und B-Filterteilen, so tritt am Ausgang 40A des Bildsensors 4 ein Bewertungssignal $u_G$ auf, während an den Ausgängen 40B' und 40C' des Bildsensors 4' jeweils Bewertungssignale $u_R$ und $u_B$ erscheinen. Die bezeichneten Ausgänge entsprechen den Ausgängen 40A, 40B und 40C von Fig. 2, auf die später im einzelnen eingegangen wird. Bei einem Farbfilter 21 vom W-Typ ist an 40A ein Bewertungssignal $u_W$ abgreifbar.

Aus den Bewertungssignalen $u_G$, $u_R$ und $u_B$ bzw. aus $u_W$, $u_R$ und $u_B$ können in an sich bekannter Weise Farbwertsignale abgeleitet werden, die dann die Helligkeiten der Grundfarben einer Farbfernsehbildröhre steuern. Je nach dem Verlauf der Empfindlichkeitskurven und nach der Breite der durch sie definierten Spektralbereiche findet eine spezielle Codierung der Bewertungssignale statt, um die Farbwertsignale zu erhalten. Empfindlichkeitskurven dieser Art sind beispielsweise in dem oben genannten Buch von H. Lang auf Seite 91, Bild 5.4 dargestellt.

Fig. 2 zeigt einen der beiden CTD-Bildsensoren, z.B. den Sensor 4, als eine auf einem Halbleitersubstrat integrierte Schaltung in Draufsicht. Dabei ist das Halbleitersubstrat, das z.B. aus n-leitendem Silizium besteht, mit 41 bezeichnet. Eine die Substratoberfläche bedeckende, elektrisch isolierende Schicht, z.B. aus $SiO_2$, ist innerhalb der gestrichelten Linien 42 wesentlich dünner ausgebildet als außerhalb derselben. Man bezeichnet die dünneren Bereiche auch als Gateoxid, die dickeren als Feldoxidbereiche. Oberhalb der isolierenden Schicht befindet sich eine mittlere Elektrode 43, die auf der einen Seite von Elektrodenreihen 44 und 45 und auf der anderen Seite von Elektrodenreihen 46 und 47 flankiert wird. Die Elektroden sind metallisch leitende Strukturen, die insbesondere aus Teilen einer ganzflächig aufgebrachten, elektrisch leitenden Beschichtung bestehen. Die Beschichtung ist beispielsweise aus polykristallinem, hochdotiertem Silizium gebildet oder besteht aus einer Metallschicht, z.B. aus Aluminium. Die Herstellung der Elektrode 43 und der Elektrodenreihen 44 bis 47 erfolgt in herkömmlicher Weise, z.B. mittels einer Reihe von fotolithografischen Schritten unter Anwendung von Masken, die die Umrisse der einzelnen Strukturen definieren.

Im einzelnen stellen die von der Elektrode 43 bedeckten Orte des Halbleitersubstrats 41, die sich unterhalb von Dünnoxidbereichen befinden, einzelne Bildpunkte 48, 49, 50, 51 usw. des Bildsensors dar. Da diese Bildpunkte eine Linie bilden, wird ein solcher Bildsensor als linear bezeichnet. Die Elektrodenreihen 44 bis 47 werden jeweils aus einzelnen dicht nebeneinanderliegenden Elektroden 441, 442, 443, 444 ... 451, 452, 453, 454 ... gebildet. Dabei befindet sich die Elektrode 451 auf der Höhe des Bildpunktes 48, die Elektroden 452 und 461 auf der Höhe des Bildpunktes 49, die Elektroden 441, 453 und 462 auf der Höhe des Bildpunktes 50, die Elektroden 442, 454, 463 und 471 auf der Höhe des Bildpunktes 51 usw.. Zwischen den Elektrodenreihen 45 bzw. 46 und der Elektrode 43 sind jeweils Transfergate-Elektroden $G_1$, $G_2$ plaziert, die die ersteren geringfügig seitlich über-lappen, jedoch von diesen durch eine Zwischenschicht elektrisch isoliert sind. Zwischen den Elektrodenreihen 44 und 45 und den Elektrodenreihen 46 und 47 befinden sich weitere Transfergate-Elektroden $G_3$ und $G_4$. Die Elektrode 43 ist über einen Anschluß mit einer Impulsspannung $\phi_1$ beschaltet, die Transfergate-Elektroden $G_1$ bis $G_4$ über einen gemeinsamen Anschluß mit einer Impulsspannung $\phi_G$. Jede vierte Elektrode 451, 455 usw. von 45 ist über eine gemeinsame Leitung mit einer Impulsspannung $\phi_1$ beschaltet, jede vierte Elektrode 452, 456 usw. liegt an einer gemeinsamen Leitung, die eine Impulsspannung $\phi_2$ führt, jede vierte Elektrode 453 usw. an einer Leitung mit der Impulsspannung $\phi_3$ und jede vierte Elektrode 453 usw. an einer Leitung mit der Impulsspannung $\phi_4$. In analoger Weise werden die einzelnen Elektroden der Reihe 46 mit den Impulsspannungen $\phi_1$ bis $\phi_4$ beschaltet, während die Elektroden der Reihen 44 und 47 mit Impulsspannungen $\phi_1'$ bis $\phi_4'$ beschaltet sind.

Jede der Elektrodenreihen 44 bis 47 gehört zu einer Ladungsverschiebeanordnung, die durch die Impulsspannungen $\phi_1$ bis $\phi_4$ bzw. $\phi_1'$ bis $\phi_4'$ getaktet werden. Am unteren Ende jeder Elektrodenreihe sind Elektroden 44g bis 47g dargestellt, die von den Taktimpulsspannungen freigeschaltet sind, jedoch an Ausgänge 44A bis 47A geführt sind. Diesen Elektroden sind ausgangsseitige Diffusionsgebiete $D_1$ bis $D_4$ nachgeordnet, die über einem gemeinsamen Anschluß 53 an einer Drainspannung $U_{DD}$ liegen. Die Ausgänge 44A bis 47A können mit einem gemeinsamen Ausgang 40A verbunden sein.

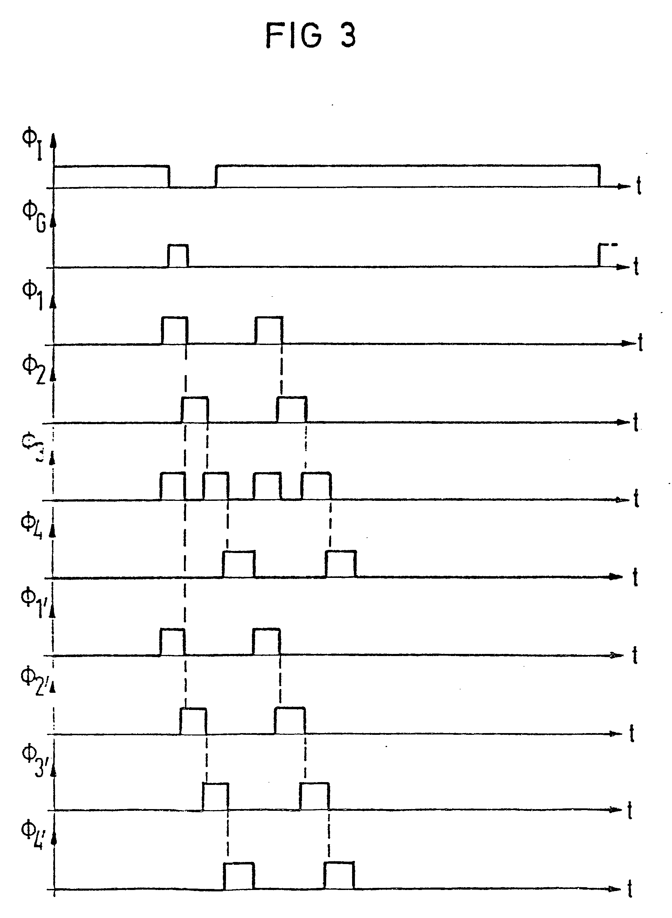

Im Betrieb wird zunächst ein Impuls $\phi_1$ angelegt, der die sog. Integrationszeit bestimmt. Innerhalb derselben sammeln sich in den Bildpunkten 48 bis 51 usw. unter dem Einfluß der Belichtung elektrische Ladungen an, die mit ihrer Größe der jeweiligen lokalen Beleuchtungsstärke entsprechen. Nach dem Ablauf der Integrations-zeit sorgt ein Transfergateimpuls $\phi_G$ dafür, daß diese Ladungen in den eingezeichneten Pfeilrichtungen aus den Bildpunkten in den Bereich der Ladungsverschiebeanordnungen 44 bis 47 verschoben werden, und zwar die unter 48 entstandene Ladung unter die Elektrode 451, die unter 49 entstandene Ladung unter 461, die unter 50 entstandene Ladung unter 441 und die unter 51 entstandene Ladung 471. Durch die entsprechend Fig. 3 zeitlich auftretenden Taktimpulsspannungen $\phi_1$ bis $\phi_4$ und $\phi_1'$ bis $\phi_4'$ werden die genannten Ladungen nach dem Durchlaufen der Ladungsverschiebeanordnungen schrittweise unter den Elektroden 44g bis 47g hindurchgeschoben und gelangen schließlich in die Diffusionsgebiete $D_1$ bis $D_4$. Die hierbei an den Elektroden 44g bis 47g auftretenden Potentialverschiebungen werden an die Ausgänge 44A bis 47A übertragen und ergeben dort Auslesesignale, die aus nacheinander auftretenden, impulsförmigen Anteilen bestehen, die den Beleuchtungsstärken in den nacheinander ausgelesenen Bildpunkten während der Integrationszeit jeweils entsprechen.

Die durch den nächstfolgenden Impuls $\phi_1$ definierte Integrationszeit fällt zeitlich mit dem Verschieben der in der vorangegangenen Integrationszeit gebildeten Ladungen über die Ladungsverschiebeanordnungen 44 bis 47 zusammen.

Ein Bildsensor gemäß Fig. 2 ist im einzelnen in der deutschen Patentschrift 2 553 658 beschrieben. Eine Vereinfachung dieser Schaltung ist insofern möglich, als die Ladungsverschiebeanordnungen 44 und 47 entfallen könne, wobei lediglich über die Anordnungen 45 und 46 ausgelesen wird. Damit reduziert sich die Anzahl der ausgelesenen Bildpunkte jeweils auf die Hälfte, nämlich auf die Punkte 48, 49 und solche Bildpunkte, die zu diesen jeweils einen Abstand aufweisen, der ein Vielfaches von vier Elektrodenabständen beträgt. Ein in dieser Weise vereinfachter Bildsensor ist beispielsweise in dem IBM Technical Disclosure Bulletin, Bd. 16, Nr. 1, Juni 1973, Seiten 173 und 174 beschrieben. Anstelle der dargestellten Ladungsverschiebeanordnungen 44 bis 47, die als SCCD-Einrichtungen mit einem Ladungstransport unmittelbar unterhalb der Substratoberfläche oder als BCCD-Einrichtungen mit einem Ladungstransport im Inneren des Substrats aufzufassen sind, können im Sinne der vorliegenden Erfindung auch an sich bekannte Eimerkettenschaltungen (BBD) verwendet werden. Beide Systeme von Ladungsverschiebeanordnungen sind in dem Buch von Sequin und Tompsett "Charge Transfer Devices", Academic Press, New York, 1975, auf den Seiten 1 bis 18 beschrieben.

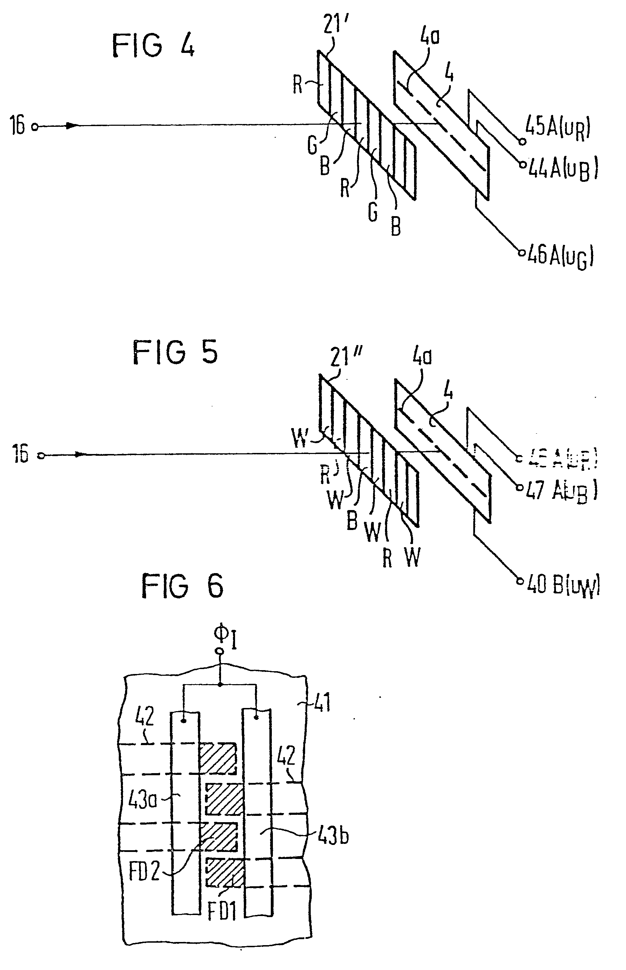

Anstelle von Ladungsverschiebeanordnungen, die im Vierphasenbetrieb arbeiten, können auch solche verwendet werden, die in an sich bekannter Weise im Zwei- oder Dreiphasenbetrieb arbeiten. Schließlich kann auch die mittlere Elektrode 43 in Fig. 3 in eine Elektrodenreihe entsprechend den Teilen 44 bis 47 zerlegt werden, wobei zunächst allen Elektroden dieser Reihe ein gemeinsamer, die Integrationszeit definierender Impuls $\phi_1$ zugeführt wird und anschließend den einzelnen Elektroden Taktimpulsspannungen $\phi_1$ bis $\phi_4$ entsprechend Fig. 4 mitgeteilt werden. Dabei ist jedoch darauf zu achten, daß lediglich die unterhalb jeder vierten Elektrode befindlichen Bildpunkte belichtet werden. In dem letztgenannten Fall ist der Ausgang 40A an den untersten Teil der Elektrode 43, der dann eine "Floating-Gate"-Elektrode darstellt, angeschlossen, wobei die Ladungsverschiebeanordnungen 44 bis 47 entfallen. In diesem Fall ist der gesamte unter der Elektrode 43 liegende Bereich der Isolierschicht als Gateoxidbereich ausgebildet.

In Fig. 1 ist der Bildsensor 4' ebenfalls entsprechend Fig. 2 ausgebildet, wobei seine Ausgänge mit 40B' und 40C' bezeichnet sind.

Zum Abtasten der nächsten Zeile wird in Fig.

1 das Bild 1 in Pfeilrichtung um einen Zeilenabstand parallel verschoben, insbesondere im Rahmen einer kontinuierlichen Vorschubbewegung. Damit verschieben sich auch die auf die Ebenen der Bildsensoren 4, 4' projizierten Abbildungen von 1, so daß die Bildpunktreihen auf die nächste Zeile ausgerichtet werden. Die Verschiebung kann auch mittels einer Vorrichtung vorgenommen werden, die eine Vielzahl von Farbbildern, die auf einem gemeinsamen Träger aufgebracht sind, in Pfeilrichtung transportiert. Insbesondere kann auf diese Weise eine Farbfilmabtastung erfolgen.

Eine andere Lösung zur Erzielung eines zeilenweisen Vorschubes besteht darin, daß ein Spiegel 3 im Strahlengang der Lichtstrahlen angeordnet ist, der um eine ortsfeste Achse 31 drehbar gelagert ist. Die von ihm reflektierten Strahlen, die mittels eines Lichtteilers 32, 32' wieder in zwei Lichtbündel aufgeteilt werden, verschieben die auf die Ebenen von zwei Bildsensoren 34, 35 projizierten Abbildungen des Farbbildes 1 in Abhängigkeit von einer Drehbewegung des Spiegels 3 in der Richtung der eingezeichneten Doppelpfeile.

Zur Vereinfachung der Schaltung nach Fig. 1 können beim Sensor 4 die Ladungsverschiebeanordnungen 44 und 47 entfallen, beim Sensor 4' ebenfalls.

Fig. 4 zeigt ein Ausführungsbeispiel, bei dem eine Aufteilung der von der Zeile 16 ausgehenden Strahlen entfällt. In den Strahlengang ist ein Filter 21' eingebracht, das Filterstreifen des R-, G- und B-Typs nebeneinander aufweist. Die Bildpunkte eines Bildsensors 4 liegen der Reihe nach hinter R-, G- und B-Filtern. Bildet man den Bildsensor für einen dreiphasigen Betrieb aus, was in Fig. 2 u.a. dazu führt, daß die Ladungsverschiebeanordnung 47 entfällt, so können an den Ausgängen 44A, 45A und 46A Bewertungssignale $u_B$, $u_R$ und $u_G$ abgegriffen werden.

Die Anordnung nach Fig. 5 entspricht der Fig. 4 bis auf den Unterschied, daß das Filter 21'' nebeneinanderliegende Filterstreifen der Typen W, R, W, B, W, R usw. aufweist. Hierbei ist eine gemäß Fig. 2 ausgebildete Vierphasenanordnung für den Bildsensor 4 vorgesehen, an deren Ausgängen 46A, 47A und 40B (Fig. 2) die Bewertungssignale $u_R$, $u_B$ und $u_W$ auslesbar sind.

Fig. 6 zeigt eine Weiterbildung des in Fig. 2 dargestellten Bildsensors, bei der die mittlere Elektrode 43 in zwei Teile 43a und 43b längsgeteilt ist, die einen vorgegebenen Abstand voneinander haben. Zwischen den Teilen 43a und 43b befindliche, in Fig. 2 dargestellte Dünnoxidbereiche FD1, FD2 usw. werden umdotiert, so daß Fotodioden entstehen, die die Empfindlichkeit des Bildsensors erhöhen. Der Teil des in Fig. 2 dargestellten Dünnoxidbereiches, der jeweils neben einer solchen Fotodiode, aber unterhalb eines der beiden Elektrodenteile 43a oder 43b liegt, bildet dann einen MIS-Kondensator, der die von der Fotodiode erzeugten Ladungsträger speichert.

Zur besseren Aufbereitung der aus den Ladungsverschiebeanordnungen ausgelesenen Bewertungssignale ist es zweckmäßig, den Ausgängen 44A bis 47A bzw. den Ausgängen 40B und 40C oder 40A Abtast- und Haltestufen nachzuschalten, die einen ausgelesenen Signalwert- solange speichern, bis er durch den nächstfolgenden ersetzt wird.

Die Farbfilter 21, 22, 21' und 21'' können entweder auf transparenten Trägerplatten angeordnet sein, die dann an den Bildsensoren befestigt sind, oder aus Farbschichten bestehen, die direkt auf die Oberfläche der Bildsensoren aufgebracht werden.

Zur Gewinnung der Bewertungssignale $u_R$ und $u_B$ genügt es in vielen Fällen, die Anzahl der zugeordneten Bildpunkte wesentlich kleiner zu wählen als die Anzahl der zur Ableitung des Signals $u_W$ erforderlichen Bildpunkte. Beispielsweise kann die Anzahl der zur Gewinnung der $u_R$ und $u_B$-Signale dienenden Bildpunkte jeweils ein Viertel der Anzahl der für das $u_W$-Signal vorgesehenen Bildpunkte betragen.

## Patentansprüche

1. Anordnung zur Abtastung eines Farbbildes (1), bei der die Abtastung vornehmende Lichtstrahlen nach drei in unterschiedlichen Spektralbereichen liegenden Empfindlichkeitskurven bewertet werden, bei der ein erster linearer CTD-Bildsensor (4) vorgesehen ist, dessen auf eine Zeile des Farbbildes (1) ausgerichtete Bildpunkte (4a) zu einer ersten Gruppe zusammengefaßt sind, hinter einem ersten Farbfilter (21) mit einem ersten gruppenspezifischen Spektralbereich angeordnet sind und jeweils mit einer oder mehreren Ladungsverschiebeanordnungen (44 bis 47) verbindbar sind, welche einen Ausgang (40A) zum sequentiellen Auslesen sämtlicher Sensorsignale der ersten Gruppe aufweisen, bei der über zwei weitere Gruppen von Bildpunkten linearer CTD-Bildsensoren, denen weitere Farbfilter mit unterschiedlichen, gruppenspezifischen Spektralbereichen vorgeordnet sind, entsprechende Sensorsignale mittels einer oder mehrerer, gruppenspezifischer Ladungsverschiebeanordnungen sequentiell und nach beiden Gruppen getrennt ausgelesen werden, bei der aus den Sensorsignalen der drei Gruppen den drei Spektralbereichen zugeordnete Bewertungssignale ($u_W$, $u_B$, $u_R$) erzeugt werden und bei der eine Vorrichtung zum Verschieben des auf die Sensorebene projizierten Farbbildes vorhanden ist, dadurch gekennzeichnet, daß ein Lichtteiler (15, 15') vorgesehen ist, der die von dem Farbbild (1) ausgehenden Lichtstrahlen in zwei Lichtbündel (B1, B2) aufteilt, daß das erste Farbfilter (21) und der erste lineare Bildsensor (4) im Strahlengang des ersten Lichtbündels (B1) vorgesehen sind, wobei das erste Farbfilter (21) einem Spektralbereich zugeordnet ist, der etwa den ganzen Bereich des sichtbaren Lichtes umfaßt und einen Teilbereich maximaler Empfindlichkeit im Spektralbereich der Grundfarbe Grün aufweist, daß im Strahlengang des zweiten Lichtbündels (B2) die weiteren Farbfilter in Form von nebeneinander angeordneten Filterteilen (22) erster und zweiter Art vorgesehen sind, von denen die ersteren dem Spektralbereich der Grundfarbe Rot und die letzteren dem Spektralbereich der Grundfarbe Blau zugeordnet sind, daß hinter den Filterteilen (22) ein zweiter linearer CTD-Bildsensor (4') angeordnet ist, dessen Bildpunkte zu den zwei weiteren Gruppen zusammengefaßt sind, wobei diese ineinander verschachtelt sind und wobei die Bildpunkte der ersten weiteren Gruppe hinter Filterteilen der ersten Art und die Bildpunkte der zweiten weiteren Gruppe hinter Filterteilen der zweiten Art liegen.

2. Anordnung zur Abtastung eines Farbbildes (1), bei der die Abtastung vornehmende Lichtstrahlen nach drei in unterschiedlichen Spektralbereichen liegenden Empfindlichkeitskurven bewertet werden, bei der ein linearer CTD-Bildsensor (4) vorgesehen ist, der auf eine Zeile des Farbbildes ausgerichtete Bildpunkte (4a) aufweist, die zu einer ersten Gruppe zusammengefaßt sind, hinter einem ersten Farbfilter mit einem ersten gruppenspezifischen Spektralbereich angeordnet sind und jeweils mit mindestens einer Ladungsverschiebeanordnung verbindbar sind, welche einen Ausgang (40B) zum sequentiellen Auslesen sämtlicher Sensorsignale der ersten Gruppe aufweist, bei der über zwei weitere Gruppen von Bildpunkten linearer CTD-Bildsensoren, denen weitere Farbfilter mit unterschiedlichen, gruppenspezifischen Spektralbereichen vorgeordnet sind, entsprechende Sensorsignale mittels jeweils einer gruppenspezifischen Ladungsverschiebeanordnung sequentiell und nach beiden Gruppen getrennt ausgelesen werden, bei der aus den Sensorsignalen der drei Gruppen den drei Spektralbereichen zugeordnete Bewertungssignale ($u_W$, $u_B$, $u_R$) erzeugt werden und bei der eine Vorrichtung zum Verschieben des auf die Sensorebene projizierten Farbbildes vorhanden ist, dadurch gekennzeichnet, daß der lineare CTD-Bildsensor (4) weitere Bildpunkte aufweist, die zu den beiden weiteren Gruppen von Bildpunkten zusammengefaßt sind, daß das erste Farbfilter mit den weiteren Farbfiltern zu einer Anordnung von Farbfilterstreifen erster, zweiter und dritter Art (W, R, B) zusammengefaßt ist, wobei die Farbfilterstreifen erster Art das erste Farbfilter darstellen, daß den Farbfilterstreifen erster Art (W) ein etwa den ganzen Bereich des sichtbaren Lichtes umfassender Spektralbereich zugeordnet ist, daß die Farbfilterstreifen zweiter Art (R) dem Spektralbereich der Grundfarbe Rot und die Farbfilterstreifen dritter Art (B) dem Spektralbereich der Grundfarbe Blau zugeordnet sind, daß die Bildpunkte des CTD-Bildsensors (4) der Reihe nach hinter Farbfilterstreifen der ersten, zweiten, ersten, dritten, ersten, zweiten Art usw. angeordnet sind und daß ein erster Teil der hinter den Farbfilterstreifen erster Art liegenden Bildpunkte mit einer ersten Ladungsverschiebeanordnung (44) und ein zweiter Teil dieser Bildpunkte mit einer zweiten Ladungsverschiebeanordnung (45) verbindbar sind, deren Ausgänge (44A, 45A) an einen gemeinsamen Ausgang (40B) geschaltet sind.

3. Anordnung nach einem der Ansprüche 1 oder 2, dadurch gekennzeichnet, daß die Ausgänge der Ladungsverschiebeanordnungen (44 bis 47) mit Abtast- und Haltestufen beschaltet sind.

4. Anordnung nach einem der vorhergehenden Ansprüche, dadurch gekennzeichnet, daß die Vorrichtung zum Verschieben des projizierten Farbbildes aus einem im Strahlengang der Lichtstrahlen angeordneten, an einer ortsfesten Achse (31) drehbar gelagerten Spiegel (3) besteht.

5. Anordnung nach einem der Ansprüche 1 bis 3, dadurch gekennzeichnet, daß die Vorrichtung zum Verschieben des projizierten Farbbildes aus einer das Farbbild (1) quer zur Zeilenrichtung verschiebenden Transportvorrichtung besteht.

6. Anordnung nach Anspruch 5, dadurch gekennzeichnet, daß die Transportvorrichtung zum Transport einer Vielzahl von auf einem gemeinsamen Träger aufgebrachten Farbbildern ausgebildet ist.

7. Anordnung nach einem der vorhergehenden Ansprüche, dadurch gekennzeichnet, daß die Bildpunkte der Bildsensoren (44') als Fotodioden mit jeweils einem in einem dotierten Halbleitersubstrat angeordneten, entgegengesetzt dotierten Gebiet (FD1, FD2) ausgebildet sind.

8. Anordnung nach einem der Ansprüche 1 bis 6, dadurch gekennzeichnet, daß die Bildpunkte der Bildsensoren (4, 4') als MIS-Speicherkondensatoren ausgebildet sind.

9. Anordnung nach den Ansprüchen 7 und 8, dadurch gekennzeichnet, daß die Bildpunkte der Bildsensoren (4, 4') jeweils aus einer Fotodiode (FD1, FD2) und einem benachbarten MIS-Speicherkondensator bestehen.

10. Anordnung nach einem der vorhergehenden Ansprüche, dadurch gekennzeichnet, daß die Farbfilter (21, 22, 21', 21'') auf transparenten Trägerplatten angeordnet sind, die auf den Bildsensoren (4, 4') befestigt sind.

11. Anordnung nach einem der Ansprüche 1 bis 9, dadurch gekennzeichnet, daß die Farbfilter (21, 22, 21', 21'') aus direkt auf die Oberfläche der Bildsensoren (4, 4') aufgebrachten Farbschichten bestehen.

**Claims**

1. An arrangement for scanning a colour image (1), wherein light beams which effect the scan are evaluated in accordance with three sensitivity curves in different spectral regions, and wherein a first linear CTD image sensor (4) is provided whose image elements (4a) constituting a line across the colour image (1), and are combined to form a first group arranged behind a first colour filter (21) having a first group-specific spectral range, and respectively connected to one or more charge shift arrangements (44 to 47) which have an output (40A) for the sequential read-out of all sensor signals of the first group, and wherein via two further groups, of image elements of linear CTD image sensors preceded by further colour filters with different, group-specific spectral ranges, corresponding sensor signals are read out sequentially and separately in accordance with the two groups by means of one or more, group-specific charge shift arrangements, and wherein evaluation signals ($u_W$, $u_B$, $u_R$) assigned to the three spectral ranges are produced from the sensor signals of the three groups, and wherein a device for shifting the colour image projected onto the sensor plane is arranged, characterised in that there is provided a beam-splitter (15, 15') which divides the light path emanating from the colour image (1) into two light beams (B1, B2), and that the first colour filter (21) and the first linear image sensor (4) are arranged in the path of the first light beam (B1), the first colour filter (21) being assigned a spectral range which comprises approximately the entire range of visible light and having a partial region of maximal sensitivity in the spectral range of the basic colour green, and that in the path of the second light beam (B2) the further colour filters are filter components arranged beside one another and which are of the first and of the second type and of which the first ones are assigned the spectral range of the primary colour red and the last ones are assigned the spectral range of the primary colour blue, and that behind the filter components (22) there is arranged a second linear CTD image sensor (4') with the image elements of the two further groups combined in interlaced fashion and where the image elements of the first further group lie behind filter components of the first type and the image elements of the second further group lie behind filter components of the second type.

2. An arrangement for scanning a colour image (1), wherein light beams which effect the scan are evaluated in accordance with three sensitivity curves in different spectral ranges, and wherein a linear CTD image sensor (4) is provided which has image elements (4a) constituting a line across the colour image and combined to form a first group arranged behind a first colour filter having a first group-specific spectral range and respectively connected to at least one charge shift arrangement which has an output (40B) for the sequential read-out of all sensor signals of the first group, and wherein via two further groups of image elements of linear CTD image sensors preceded by further colour filters with different group-specific spectral ranges, corresponding sensor signals are read out sequentially and separately in accordance with the two groups, and wherein evaluation signals ($u_W$, $u_B$, $u_R$) assigned to the three spectral ranges are produced from the sensor signals of the three groups, and wherein a device for shifting the colour image projected onto the sensor plane is arranged, characterised in that the linear CTD image sensor (4) has further image elements which are combined to form the two further groups of image elements, and that the first colour filter is combined with the further colour filters to form an arrangement of colour filter strips of the first, second and third type (W, R, B), where the colour filter strips of the first type represent the first colour filter, and that the colour filter strips of the first type (W) are assigned a spectral range which comprises approximately the entire range of visible light, and that the colour filter strips of the second type (R) are assigned the spectral range of the primary colour red and the colour filter strips of the third type (B) are assigned the spectral range of the primary colour blue, and that the image elements of the CTD image sensor (4) are arranged one after the other behind colour filter strips of the first, second, third, first, second type etc., and that a first portion of the image elements lying behind the colour filter strips of the first type can be connected to a first charge shift arrangement (44) and a second portion of these image elements can be connected to a second charge shift arrangement (45) whose outputs (44A, 45A) are switched to a common output (40B).

3. An arrangement as claimed in one of Claims 1 or 2, characterised in that the outputs of the charge shift arrangements (44 to 47) are provided with scanning and holding stages.

4. An arrangement as claimed in one of the preceding Claims, characterised in that the device for shifting the projected colour image consists of a reflector (3) which is rotatably mounted on a stationary axis (31) and arranged in the path of the light beams.

5. An arrangement as claimed in one of Claims 1 to 3, characterised in that the device for shifting the projected colour image consists of a transport device which shifts the colour image transversely to the line direction.

6. An arrangement as claimed in Claim 5, characterised in that the transport device is designed for the transportation of a plurality of colour images applied on a common carrier.

7. An arrangement as claimed in one of the preceding Claims, characterised in that the image elements of the image sensors (44') are constructed as photo-diodes, each having an oppositely doped zone (FD1, FD2) which is arranged in a doped semiconductor substrate.

8. An arrangement as claimed in one of Claims 1 to 6, characterised in that the image elements of the image sensors (4, 4') are designed as MIS storage capacitors.

9. An arrangement as claimed in Claims 7 and 8, characterised in that the image elements of the image sensors (4, 4') each consist of a photo-diode (FD1, FD2) and an adjacent MIS storage capacitor.

10. An arrangement as claimed in one of the preceding claims, characterised in that the colour filters (21, 22, 21', 22') are arranged on transparent carrier plates which are fixed on the image sensors (4, 4').

11. An arrangement as claimed in one of Claims 1 to 9, characterised in that the colour filters (21, 22, 21', 22') consist of colour layers directly applied on the surface of the image sensors (4, 4').

**Revendications**

1. Dispositif pour l'analyse d'une image en couleurs (1), dans lequel les rayons lumineux effectuant l'analyse sont évalués suivant trois courbes de sensibilité se trouvant dans trois gammes spectrales différentes, dans lequel est prévu un premier détecteur d'images CTD (à transfert de charge) linéaire (4) dont les éléments d'images (4a) dirigés vers une ligne de l'image en couleurs (1) sont réunis en un premier groupe, sont disposés derrière un premier filtre chromatique (21) possédant une première gamme spectrale spécifique au premier groupe et peuvent être reliés respectivement à une ou plusieurs dispositifs à transfert de charge (44 à 47) qui comporte une sortie (40A) pour la lecture séquentielle de tous les signaux du détecteur du premier groupe, dans lequel, par l'intermédiaire de deux autres groupes d'éléments d'images de détecteurs d'images CTD linéaires devant lesquels sont disposés d'autres filtres chromatiques possédant des gammes spectrales différentes spécifiques aux groupes, des signaux correspondants du détecteur sont lus séquentiellement et de façon distincte suivant les deux groupes, au moyen d'un ou de plusieurs dispositifs de transfert de charge spécifique aux groupes, dans lequel à partir des signaux du détecteur des trois groupes sont produits des signaux d'évaluation ($u_W$, $u_B$, $u_R$) associés aux trois gammes spectrales, et dans lequel est prévu un dispositif pour déplacer l'image en couleurs projetée sur le plan du détecteur, caractérisé par le fait qu'il est prévu un diviseur de lumière (15, 15') qui divise les rayons lumineux provenant de l'image en couleurs (1) en deux faisceaux lumineux (B1, B2), que le premier filtre chromatique (21) et le premier détecteur d'images linéaire (4) sont disposés sur le trajet du rayon du premier faisceau lumineux (B1), le premier filtre chromatique (21) étant associé à une gamme spectrale qui comprend sensiblement toute la gamme de la lumière visible et qui présente une gamme partielle de sensibilité maximale dans la gamme spectrale de la couleur de base vert, que les autres filtres chromatiques, se présentant sous la forme de parties de filtres (22) de premier et second types disposées les unes à côté des autres, dont les premières sont associées à la gamme spectrale de la couleur de base rouge et les dernières à la gamme spectrale de la couleur de base bleu, sont disposés dans le trajet des rayons du second faisceaux lumineux (B2), que derrière les parties de filtre (22) sont disposés un second détecteur d'images CTD linéaire dont les éléments d'images sont réunis pour former les deux autres groupes, ceux-ci étant imbriqués les uns dans les autres et les éléments d'images du premier autre groupe se trouvant derrière des parties de filtres du premier type et les éléments d'images du second autre groupe se trouvant derrière des parties de filtres du second type.

2. Dispositif pour l'analyse d'une image en couleurs (1), dans lequel les rayons lumineux effectuant l'analyse sont évalués suivant trois courbes de sensibilité se trouvant dans trois gammes spectrales différentes, dans lequel est prévu un détecteur d'images CTD (à transfert de charge) linéaire (4) qui comporte des éléments d'images (4a) dirigés vers une ligne de l'image en couleurs (1) qui sont réunis en un premier groupe, sont disposés derrière un premier filtre chromatique possédant une première gamme spectrale spécifique au premier groupe et peuvent être reliés respectivement à au moins un dispositif à transfert de charge qui comporte une sortie (40B) pour la lecture séquentielle de tous les signaux du détecteur du premier groupe, dans lequel, par l'intermédiaire de deux autres groupes d'éléments d'images de détecteurs d'images CTD linéaires devant lesquels sont disposés d'autres filtres chromatiques possédant des gammes spectrales différentes spécifiques aux groupes, des signaux correspondants du détecteur sont lus séquentiellement et de façon distincte suivant les deux groupes, respectivement au moyen d'un dispositif à transfert de charge spécifique aux groupes, dans lequel à partir des signaux du détecteur des trois groupes sont produits des signaux d'évaluation ($u_W$, $u_B$, $u_R$) associés aux trois gammes spectrales, et dans lequel est prévu un dispositif pour déplacer l'image en couleurs rejetée sur le plan du détecteur, caractérisé par le fait que le détecteur d'images CTD linéaire (4) comporte d'autres éléments d'images qui sont réunis pour former les deux autres groupes d'éléments d'images, que le premier filtre chromatique est réuni avec les autres filtres chromatiques pour former un agencement de bandes de filtres colorés de premier, second et troisième type (W, R, B), les bandes de filtre coloré du premier type représentant le premier filtre chromatique, qu'aux bandes de filtres colorés du premier type (W) est associée une gamme spectrale comprenant sensiblement toute la gamme de la lumière visible, qu'aux bandes de filtres colorés du second type (R) est associée la gamme spectrale de la couleur de base rouge et aux bandes de filtres colorés du troisième type (B) est associée la gamme spectrale de la couleur de base bleu, que les éléments d'images du détecteur d'images CTD (4) sont disposés en série derrière des bandes de filtres colorés des premier, second, premier, troisième, premier, second, types etc., et qu'une première partie des éléments d'images se trouvant derrière les bandes de filtres colorés du premier type peuvent être reliés à un premier dispositif à transfert de charge (44) et une seconde partie de ces éléments d'images peuvent être reliés à un second dispositif à transfert de charge (45) dont les sorties (44A, 45A) sont reliées à une sortie commune (40B).

3. Dispositif suivant l'une des revendications 1 ou 2, caractérisé par le fait que les sorties des dispositifs à transfert de charge (44 à 47) sont reliées à des étages d'analyse et de maintien.

4. Dispositif suivant l'une des revendications précédentes, caractérisé par le fait que le dispositif pour déplacer l'image en couleurs projetée est constitué par un miroir (3) disposé dans le trajet des rayons lumineux et monté de façon à pouvoir tourner autour d'un axe fixe (31).

5. Dispositif suivant l'une des revendications 1 à 3, caractérisé par le fait que le dispositif pour déplacer l'image en couleurs projetée est constitué par un dispositif de transport déplaçant l'image en couleurs (1) perpendiculairement à la direction des lignes.

6. Dispositif suivant la revendication 5, caractérisé par le fait que le dispositif de transport est agencé pour le transport de plusieurs images en couleurs disposées sur un support commun.

7. Dispositif suivant l'une des revendications précédentes, caractérisé par le fait que les éléments d'images des détecteurs d'images (44') se présentent sous la forme de diodes photosensibles comportant respectivement une région (FD1, FD2) disposée dans un substrat semiconducteur dopé et dopé de façon opposée.

8. Dispositif suivant l'une des revendications 1 à 6, caractérisé par le fait que les éléments d'images des détecteurs d'images (4, 4') se présentent sous la forme de condensateurs de mémorisation MIS.

9. Dispositif suivant les revendications 7 et 8, caractérisé par le fait que les éléments d'images des détecteurs d'images (4, 4') sont respectivement constitués par une diode photosensible (FD1, FD2) et un condensateur de mémorisation MIS voisin.

10. Dispositif suivant l'une des revendications précédentes, caractérisé par le fait que les filtres chromatiques (21, 22, 21', 21'') sont disposés sur des plaques-support transparentes qui sont fixées sur les détecteurs d'images (4, 4').

11. Dispositif suivant l'une des revendications 1 à 9, caractérisé par le fait que les filtres chromatiques (21, 22, 21', 21'') sont constitués par des couches colorées déposées directement sur la surface des détecteurs d'images (4, 4').

# FIG 1

# FIG 2

# FIG 3

FIG 4

16 ⊶⟶

21'

R
G
B
R
G
B

4a
4

45A(uR)
44A(uB)

46A(uG)

FIG 5

16 ⊶⟶

21"

W
R
W
B
W
R
W

4a
4

45A(uR)
47A(uB)

40B(uW)

FIG 6

Φ₁

42

42

43a

43b

FD2

FD1

41